# EUROPEAN PATENT SPECIFICATION

(11) **EP 3 017 978 B1**
(45) Date of publication and mention of the grant of the patent: **10.11.2021**
(21) Application number: 15191803.4
(22) Date of filing: 28.10.2015
(51) Int. Cl.: B60H 1/00

(54) **VEHICLE AIR CONDITIONING SYSTEM**
FAHRZEUGKLIMAANLAGENSYSTEM
SYSTÈME DE CLIMATISATION D'AIR POUR VÉHICULE

(30) Priority: 10.11.2014 DE 102014116384
(43) Date of publication of application: 11.05.2016
(73) Proprietor: Valeo Klimasysteme GmbH, 96476 Bad Rodach (DE)
(72) Inventor: SCHWAB, Steffen, 98553 SCHLEUSINGEN (DE); REINHOLD-LOPEZ, Karla, 96450 COBURG (DE); BECKER, Alexander, 96450 COBURG (DE)
(74) Representative: Valeo Systèmes Thermiques

(56) References cited:
- EP-A1- 2 407 326
- DE-A1- 10 316 352
- US-A1- 2013 137 355
- US-B1- 6 722 152
- US-B1- 6 758 739
- None

## Description

The invention relates to a vehicle air conditioning system for controlling the air in a vehicle internal compartment, having a blower unit that comprises an air inlet and an air outlet and can generate an air flow from the air inlet to the air outlet; a ventilation duct that connects the air outlet of the blower unit to the vehicle internal compartment; an evaporator that is arranged in the ventilation duct, and a CO₂ sensor for monitoring the CO₂ concentration in the air.

It is already generally known from the prior art to equip vehicles with air conditioning systems that comprise a CO₂ sensor for monitoring the CO₂ concentration in the air. Sensors of this type can by way of example contribute to the increase in air quality in the vehicle internal compartment in that in the event of a predetermined CO₂ limit value being exceeded they switch the vehicle air conditioning system from a recirculation mode at least temporarily into a fresh air mode. Moreover, it is known to monitor the CO₂ content of the drawn-in fresh air by means of a sensor and in the event of a predetermined CO₂ limit value being exceeded (for example in the case of traffic congestion in a tunnel), to switch the vehicle air conditioning system from a fresh air mode into a recirculating mode.

Nowadays, with the increasing use of carbon dioxide as a cooling medium in a cooling circuit of the vehicle air conditioning system, a further important demand is placed on the CO₂ sensor. In other words, the sensor is to reliably detect a CO₂ leakage, in particular in the region of the evaporator that is arranged in the ventilation duct and through which a cooling medium is flowing, in order to initiate suitable measures that reliably prevent an undesirably high and in particular harmful to health CO₂ concentration in the vehicle internal compartment.

DE 198 50 914 A1 discloses a vehicle air conditioning system in which a CO₂ sensor and also a flap are provided in the air flow direction downstream of the heat exchanger, in other words downstream of the evaporator, wherein the flap closes the air supply to the vehicle internal compartment in the event of a predetermined CO₂ limit value being exceeded. However, it has been established that this construction of the vehicle air conditioning system also has some disadvantages.

In other words, the air flow cross-section in the region of the evaporator is very large in order to achieve an efficient as possible procedure for cooling the air that is supplied to the vehicle internal compartment. If the CO₂ sensor is installed in the region of this large flow cross-section, it is possible, depending upon the leakage site in the evaporator, for the CO₂ concentration to increase in a part cross-section of the ventilation duct that is not detected by the CO₂ sensor. Consequently it is in no way assured that the increased CO₂ concentration is detected immediately after the leakage has occurred.

Owing to the installation space arrangements regularly being very constricted downstream of the evaporator, it is difficult to arrange the CO₂ sensor in a region that is further away from the evaporator and has a smaller flow cross-section. Moreover, the air in this region is flowing at an increased rate so that the disruption that is caused in the flow cross-section as a result of the CO₂ sensor can lead to the development of undesired noises that can be regarded as unpleasant or disturbing in the vehicle internal compartment.

Moreover, although the regular air supply is prevented from flowing to the vehicle internal compartment by way of the air outlets by closing the flap owing to the increased CO₂ concentration, the general air flow is however also not interrupted in the air conditioning system. It is therefore possible for the carbon dioxide to also spread out in the opposite direction to the actual flow direction and in an undesired manner to pass by way of the actual intake opening for the recirculated air into the vehicle internal compartment.

Document DE10316352A1 discloses a vehicle air conditioning system wherein the CO2 is arranged upstream of the evaporator in the vehicle air conditioning system, to eliminate the described disadvantages of the prior art and to provide a vehicle air conditioning system that with minimal outlay and without producing additional ventilating noises monitors the CO₂ concentration in the air. In particular, when using carbon dioxide as the cooling medium, increased CO₂ concentrations that are caused in the vehicle internal compartment as a result of leakages are to be detected reliably and in good time.

Said leakage detection is only active in a recirculating mode, and the sensor is deactivated in fresh air mode to reduce energy consumption.

The object of the present invention is to further improve reliability of leakage detection in all air conditioning modes.

This object is achieved by virtue of a vehicle air conditioning system according to the features of claim 1, wherein the CO₂ sensor is arranged upstream of the evaporator in the vehicle air conditioning system, wherein the vehicle air conditioning system is configured to monitor the CO2 concentration in the air in the fresh air mode, recirculating air mode and mixed air mode.

The invention thus relates to the surprising knowledge that a CO₂ leakage that is critical for the vehicle occupants is also detected reliably and in good time in the region of the evaporator when the corresponding sensor is arranged upstream of the evaporator with regard to the air flow direction in the vehicle air conditioning system. Owing to the advantageous air flow and installation space arrangements upstream of the evaporator, the CO₂ sensor can moreover be easily mounted at that site without causing undesired air flow noises.

It is preferred that the vehicle air condition system comprises a cooling circuit that comprises carbon dioxide as a cooling medium, wherein the evaporator is connected to the cooling circuit. The construction with the CO₂ sensor arranged upstream of the evaporator is consequently also suitable for vehicle air conditioning systems where carbon dioxide is used as the cooling medium, since in particular increased CO₂ concentrations that are caused as a result of possible leakages of cooling medium are detected in the ventilation duct reliably and in good time by the CO₂ sensor.

According to the invention, the vehicle air conditioning system comprises an incoming air duct that extends from the air inlet of the blower unit as far as the recirculating air opening that is adjoining the vehicle internal compartment, wherein the CO₂ sensor is arranged between the recirculating air opening and the evaporator.

In accordance with one embodiment, which is not part of the invention, the CO₂ sensor is provided in the incoming air duct between the recirculating air opening and the air inlet of the blower unit. It is possible to install the CO₂ sensor in this region without any particular problems with regard to the installation space and air flow arrangements in this region.

By way of example, the CO₂ sensor is arranged in this case on one end of the incoming air duct, said end being allocated to the recirculating air opening, and said CO₂ sensor is preferably at a distance of a maximum 20 cm, in particular 5 cm, from the end of the incoming air duct in the air flow direction. Owing to the proximity of the vehicle internal compartment, the senor can also detect CO₂ concentrations in the vehicle internal compartment when air is not being drawn in by the vehicle air conditioning system by way of the recirculating air opening. Owing to the weight of air components, the CO₂ concentration is the greatest on the vehicle floor, in other words in the lower region of the vehicle internal compartment. Since the recirculating air opening is usually arranged in the foot space of the front passenger, in other words close to the floor, the CO₂ sensor can in this case detect any increased CO₂ concentrations particularly rapidly and reliably.

In accordance with the invention, the CO₂ sensor is arranged in the ventilation duct between the evaporator and the air outlet of the blower unit. The comparatively large flow cross-sections in this region of the ventilation duct render it possible for the CO₂ sensor to be installed easily. The air flow arrangements are also non-critical in this region so that any distortion of the flow cross-section as a result of installing the CO₂ sensor does not cause any undesired flow noises.

Moreover, the ventilation duct in this embodiment of the vehicle air conditioning system preferably comprises a maintenance opening for installing and/or removing the CO₂ sensor. In this manner, it is possible with minimal outlay to exchange the CO₂ sensor, for example in the event of a defect.

In accordance with a further embodiment of the vehicle air conditioning system, an air filter for cleaning the air is provided in the ventilation duct upstream of the evaporator, wherein the ventilation duct comprises a maintenance opening for installing and/or removing the air filter. The air filter protects on the one hand the evaporator from loose, corrosive particles in the air flow and increases on the other hand the air quality in the vehicle internal compartment in that dust and/or unpleasant smells are removed from the air that is supplied to the vehicle internal compartment. Since the filter effect reduces over the course of time, it is necessary at predefined time intervals to exchange the air filter, wherein said air filter is exchanged by way of the corresponding maintenance opening with minimal outlay.

It is particularly preferred that the maintenance opening for installing and/or removing the CO₂ sensor and the maintenance opening for installing and/removing the air filter are one and the same opening. In other words, the maintenance opening of the air filter that is usually provided in any case in the vehicle air conditioning system is also used for exchanging the CO₂ sensor in a simple and rapid manner as required.

In particular, the CO₂ sensor is arranged in the ventilation duct between the evaporator and the air filter. The air flow upstream of the air filter is decelerated and mixed by means of the flow resistance of the air filter so that the air flow downstream of the air filter is to a great extent homogenous with a uniform CO₂ concentration. Consequently, a CO₂ sensor that is arranged in this region provides measured values that essentially indicate the average CO₂ concentrations of air in the ventilation duct. Significant differences in the CO₂ content are to a great extent excluded downstream of the air filter by way of the flow cross-section of the ventilation duct.

It is preferred that the CO₂ sensor comprises a measuring range that detects CO₂ concentrations greater than 500 ppm, in particular CO₂ concentrations greater than 1,000 ppm. As an alternative or in addition thereto, the CO₂ sensor can have a low level of measuring accuracy with maximum measurement deviations of more than 10%, in particular more than 20%. It is not necessary to detect very small CO₂ concentrations or to detect CO₂ concentrations in a particularly exact manner in the case of the present application of the CO₂ sensor in the vehicle air conditioning unit. With regard to the comfort function for improving the air quality in the vehicle internal compartment, it is not necessary to maintain exactly a selected CO₂ maximum value since it is rather a qualitative assessment of the air. The CO₂ concentration is in the magnitude of approx. 1,000 ppm and is far removed from a CO₂ concentration that is harmful to health. Considerations for the health of the vehicle occupants do not come into effect until the CO₂ concentrations are extremely high at 30,000-50,000 ppm, as can occur by way of example when leakages of CO₂ cooling medium occur in the region of the evaporator. CO₂ sensors that only provide reliable measurement values above approx. 1,000 ppm and/or have a comparatively low level of measuring accuracy reliably detect an increased CO₂ concentration long before a CO₂ concentration is achieved that is harmful for the vehicle occupant. In comparison to sensors that can detect very small CO₂ concentrations and/or have a very high level of measuring accuracy, the "more inaccurate" sensors that are designed for higher CO₂ concentrations are considerably more robust and consequently have a considerably longer serviceable life. The more robust sensors are in addition more compact, cheaper and require less energy.

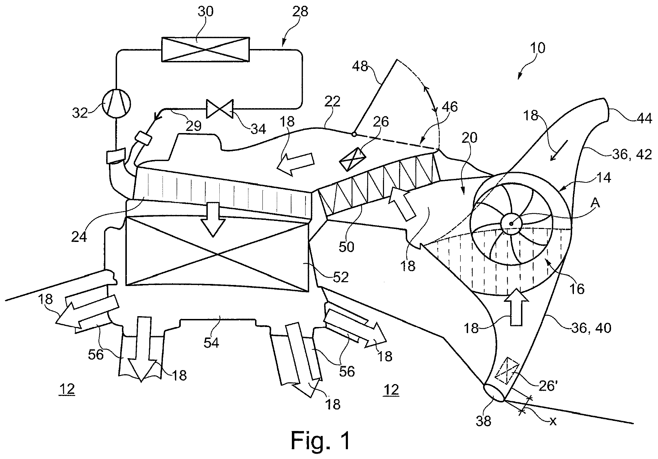

Further features and advantages of the invention arise from the description hereinunder of a preferred embodiment with reference to the drawing.

The single figure illustrates a schematic sectional view of a vehicle air conditioning system 10 in accordance with the invention for controlling the air in a vehicle internal compartment 12, having a blower unit 14 that comprises an air inlet 16 for drawing in air 18 and also an air outlet 20 for discharging air 18, and during the operation of the blower unit an air flow is generated from the air inlet 16 that is arranged upstream towards the air outlet 20 that is arranged downstream. The blower unit 14 in the present case is a radial or centrifugal ventilator that draws in the air 18 in an axial manner and discharges said air in a radial manner with regard to a ventilator axis A.

Moreover, the vehicle air conditioning system 10 comprises a ventilation duct 22 that connects the air outlet 20 of the blower unit 14 to the vehicle internal compartment 12; an evaporator 24 that is arranged in the ventilation duct 22 and can cool the through-flowing air 18; and also a CO₂ sensor 26, 26' for monitoring a CO₂ concentration in the air 18.

The evaporator 24 is connected to a cooling circuit 28 that uses carbon dioxide as the cooling medium 29. The cooling circuit 28 of the vehicle air conditioning system 10 is indicated only schematically in the figure and in addition to the evaporator 24 comprises a condenser 30, a compressor 32 and an expansion flap 34.

Although the CO₂ sensor 26, 26' is to detect in particular a leakage in the ventilation duct 22 of the carbon dioxide that is being used as the cooling medium, the sensor 26, 26' is surprisingly not arranged downstream of the evaporator 24 with regard to the flow direction of the air 18 but rather is arranged upstream of the evaporator 24 in the vehicle air conditioning system 10. Owing to the advantageous air flow and installation space arrangements, the CO₂ sensor 26, 26' can be installed upstream of the evaporator 24 with minimal outlay and without causing undesired air flow noises.

The vehicle air condition system 10 comprises in the illustrated embodiment an incoming air duct 36 that extends from the air inlet 16 of the blower unit 14 as far as to a recirculating air opening 38 that is adjoining the vehicle internal compartment, wherein the CO₂ sensor 26, 26' is arranged between the recirculating air opening 38 and the evaporator 24. As is indicated in the figure, the incoming air duct 36 comprises, starting from the air inlet 16 of the blower unit 14, a recirculating air branch line 40 and a fresh air branch line 42, wherein the recirculating air branch line 40 extends to the recirculating air opening 38, and the fresh air branch line 42 extends to a fresh air opening 44.

An incoming air flap (not illustrated) is usually provided in the region of the axial air inlet 16, indicated by the broken line, of the blower unit 14 and said incoming air flap renders it possible to operate the vehicle air conditioning system 10 in a fresh air mode, recirculating air mode or mixed air mode.

In accordance with the figure, the CO₂ sensor 26 is arranged in the ventilation duct 22 between the evaporator 24 and the air outlet 20 of the blower unit 14, wherein the ventilation duct 22 comprises a maintenance opening 46 for installing and/or removing the CO₂ sensor 26. The maintenance opening 46 can be closed by way of example by means of a pivotable flap 48.

Moreover, an air filter 50 for cleaning the air 18 is provided upstream of the evaporator 24 in the ventilation duct 22, wherein the ventilation duct 22 comprises a closable maintenance opening 46 for installing and/or removing the air filter 50. In the present exemplary embodiment of the vehicle air conditioning system 10, the maintenance opening 46 for installing and/or removing the CO₂ sensor 26 and the maintenance opening 46 for installing and/or removing the air filter 50 are one and the same opening so that it is only necessary to provide a single maintenance opening 46 in the ventilation duct 22 for exchanging the CO₂ sensor 26 and the air filter 50.

The CO₂ sensor 26 is specifically arranged in the ventilation duct 22 between the evaporator 24 and the air filter 50. The positioning of the CO₂ sensor 26 downstream of the air filter 50 provides the advantage that in this region, when viewed across the cross-section of the ventilation duct 22, a very homogenous CO₂ concentration is present and the CO₂ sensor 26 consequently ascertains a representative average value for the CO₂ concentration in the air 18.

In accordance with an alternative embodiment variant of the vehicle air conditioning system 10, that is not part of the invention, the CO₂ sensor 26' is arranged in the incoming air duct 36 between the recirculating air opening 38 and the air inlet 16 of the blower unit 14.

The CO₂ sensor 26' indicated in the figure by the broken line is installed on one end of the incoming air duct 36 that is allocated to the recirculating air opening 38 and said CO₂ sensor is at a distance x ≤ 20 cm, in particular x ≤5 cm, from the recirculating air opening 38 in the air flow direction. Owing to this proximity to the vehicle internal compartment 12, the CO₂ sensor 26 can also detect in an advantageous manner an increased CO₂ concentration in the vehicle internal compartment 12 if the vehicle air conditioning system 10 is being operated by way of example in the fresh air mode, in other words is not drawing in any air 18 by way of the recirculating branch line 40.

Moreover, in accordance with the figure, a heating device 52 for warming the air 18 in the ventilation duct 22 is provided in the ventilation duct 22 downstream of the evaporator 24. The ventilation duct 22 issues downstream of the heating device 52 into an air distributing chamber 54 and the air 18 can flow from said air distributing chamber by way of air outlet ducts 56 into the vehicle internal compartment 12.

Irrespective of its positioning, it is quite sufficient if the CO₂ sensor 26, 26' has a measuring range that only reliably detects CO₂ concentrations greater than 500 ppm, in particular greater than 1,000 ppm and/or if the CO₂ sensor 26, 26' has a low level of measuring accuracy with maximum measurement deviations of more than 10%, in particular more than 20%.

Sensors 26 that can detect a smaller CO₂ concentration are not required since the air 18 that has CO₂ concentrations of up to approx. 1,000 ppm is still described as air that is of a good quality and it is not necessary to perform any measures for improving the air quality. When said sensors are used in vehicle air conditioning systems 10, it is also not necessary for the measuring accuracy to be of a particularly high level since an approximate CO₂ concentration is quite sufficient for evaluating the air quality. Only CO₂ concentrations of above 30,000-50,000 ppm pose health hazards for the vehicle occupants. An increased CO₂ concentration is thus itself reliably detected by a CO₂ sensor 26 with a very low level of measuring accuracy long before these critical values are achieved.

It has been established that the CO₂ sensor 26 that is arranged upstream of the evaporator 24 also detects an increased CO₂ concentration reliably and in good time when a leakage of the carbon dioxide that is used as the cooling medium occurs in the ventilation duct 22.

The reaction time between the increase in the CO₂ concentration in the vehicle internal compartment 12 and the increased CO₂ concentration being detected by the sensor 26, 26' is quite sufficient in order to initiate measures in good time for reducing the CO₂ concentration. Even when an extraordinarily large CO₂ leakage occurs in the region of the evaporator 24, CO₂ concentrations that could lead to a health hazard for the vehicle occupants are by far not achieved.

In the case of a CO₂ leakage occurring in the region of the evaporator 24, the air 18 is discharged with an increased CO₂ concentration into the vehicle internal compartment 12 without the CO₂ sensor 26 immediately detecting the increased CO₂ concentration.

However, in the recirculating air mode or mixed air mode of the vehicle air conditioning system 10, air 18 that has an increased CO₂ concentration is drawn from the vehicle internal compartment 12 by way of the recirculating air opening 38 so that the sensor 26, 26' then detects the excessively high CO₂ concentration. On the basis of a corresponding sensor signal, suitable measures can be initiated for reducing the CO₂ concentration. By way of example, the vehicle air conditioning system 10 is transposed in this case into a fresh air mode.

If the vehicle air conditioning system 10 is already in the fresh air mode, it has been established that, even when an extraordinarily large CO₂ leakage occurs in the region of the evaporator 24, the CO₂ concentration in the vehicle internal compartment 12 also remains far below the critical CO₂ concentration owing to the fact that fresh air (with a small CO₂ concentration) is continuously supplied. Consequently, it is not absolutely necessary to detect the CO₂ leakage using the sensor 26, 26' since there is no health hazard for the vehicle occupants. However, it is possible, particularly in the embodiment variant using the CO₂ sensor 26', even in this case to detect an increased CO₂ concentration in the vehicle internal compartment by means of the sensor 26'.

## Claims

1. Vehicle air conditioning system for controlling the air in a vehicle internal compartment (12), having
- a blower unit (14) that comprises an air inlet (16) and also an air outlet (20) and can generate an air flow from the air inlet (16) to the air outlet (20),
- a ventilation duct (22) that connects the air outlet (20) of the blower unit (14)to the vehicle internal compartment (12),
- an evaporator (24) that is arranged in the ventilation duct (22),
- an incoming air flap provided in the region of the air inlet (16) of the blower unit (14), said incoming air flap being configured to operate the vehicle air conditioning system 10 in a fresh air mode, recirculating air mode or mixed air mode, and
- a CO₂ sensor (26, 26') for monitoring a CO₂ concentration in the air (18), said CO₂ sensor (26, 26') being arranged upstream of the evaporator (24) in the vehicle air conditioning system (10),
**characterized in that** an incoming air duct (36) is provided that extends from the air inlet (16) of the blower unit (14) to a recirculating air opening (38) that is adjoining the vehicle internal compartment (12), wherein the CO₂ sensor (26, 26') is arranged between the recirculating air opening (38) and the evaporator (24), the CO₂ sensor (26) being arranged in the ventilation duct (22) between the evaporator (24) and the air outlet (20) of the blower unit (14), wherein the vehicle air conditioning system (10) is configured to monitor the CO₂ concentration in the air (18) in the fresh air mode, recirculating air mode and mixed air mode.

2. Vehicle air conditioning system according to Claim 1, **characterized in that** a cooling circuit (28) is provided that uses CO₂ as the cooling medium (29), wherein the evaporator (24) is connected to the cooling circuit (28) .

3. Vehicle air conditioning system according to Claim 1, **characterized in that** the ventilation duct (22) comprises a maintenance opening (46) for installing and/or removing the CO₂ sensor (26).

4. Vehicle air conditioning system according to any one of the preceding claims, **characterized in that** an air filter (50) for cleaning the air (18) is provided in the ventilation duct (22) upstream of the evaporator (24), wherein the ventilation duct (22) comprises a maintenance opening (46) for installing and/or removing the air filter (50).

5. Vehicle air conditioning system according to Claim 3 and 4, **characterized in that** the maintenance opening (46) for installing and/or removing the CO₂ sensor (26) and the maintenance opening (46) for installing and/or removing the air filter (50) are one and the same opening.

6. Vehicle air conditioning system according Claim 4 or 5, **characterized in that** the CO₂ sensor (26) is arranged in the ventilation duct (22) between the evaporator (24) and the air filter (50).

7. Vehicle air conditioning system according to any one of the preceding claims, **characterized in that** the CO₂ sensor (26, 26') comprises a measuring range that detects CO₂ concentrations greater than 500 ppm, in particular greater than 1,000 ppm, and/or that the CO₂ sensor (26, 26') can have a low level of measuring accuracy with maximum measurement deviations of more than 10%, in particular more than 20%.

## Patentansprüche

1. Fahrzeug-Klimaanlage zur Steuerung der Luft in einem Fahrzeuginnenraum (12), mit
- einem Lüfter (14), der einen Lufteinlass (16) sowie einen Luftauslass (20) aufweist und einen Luftstrom vom Lufteinlass (16) zum Luftauslass (20) erzeugen kann,
- einem Lüftungskanal (22), der den Luftauslass (20) des Lüfters (14) mit dem
Fahrzeuginnenraum (12) verbindet,
- einem Verdampfer (24), der im Lüftungskanal (22) angeordnet ist,
- eine Zuluftklappe, die im Bereich des Lufteinlasses (16) des Lüfters (14) vorgesehen ist, wobei die Zuluftklappe zum Frischluft-, Umluft- oder Mischluftbetrieb der Fahrzeug-Klimaanlage (10) konfiguriert ist, und
- einem CO₂-Sensor (26, 26') zur Überwachung einer CO₂-Konzentration in der Luft (18), wobei der CO₂-Sensor (26, 26') stromaufwärts des Verdampfers (24) in der Fahrzeug-Klimaanlage (10) angeordnet ist,
**dadurch gekennzeichnet, dass** ein Zuluftkanal (36) vorgesehen ist, der sich vom Lufteinlass (16) des Lüfters (14) bis zu einer an den Fahrzeuginnenraum (12) angrenzenden Umluftöffnung (38) erstreckt, wobei der CO₂-Sensor (26, 26') zwischen der Umluftöffnung (38) und dem Verdampfer (24) angeordnet ist, der CO₂-Sensor (26) im Lüftungskanal (22) zwischen dem Verdampfer (24) und dem Luftauslass (20) des Lüfters (14) angeordnet ist, wobei die Fahrzeug-Klimaanlage (10) zur Überwachung der CO2-Konzentration in der Luft (18) in dem Frischluft-, Umluft- und Mischluftmodus konfiguriert ist.

2. Fahrzeug-Klimaanlage nach Anspruch 1, **dadurch gekennzeichnet, dass** ein Kältekreislauf (28) vorgesehen ist, der CO₂ als Kältemittel (29) verwendet, wobei der Verdampfer (24) an den Kältekreislauf (28) angeschlossen ist.

3. Fahrzeug-Klimaanlage nach Anspruch 1, **dadurch gekennzeichnet, dass** der Lüftungskanal (22) eine Wartungsöffnung (46) zur Montage und/oder Demontage des CO₂-Sensors (26) aufweist.

4. Fahrzeug-Klimaanlage nach einem der vorhergehenden Ansprüche, **dadurch gekennzeichnet, dass** im Lüftungskanal (22) stromaufwärts des Verdampfers (24) ein Luftfilter (50) zur Reinigung der Luft (18) vorgesehen ist, wobei der Lüftungskanal (22) eine Wartungsöffnung (46) zur Montage und/oder Demontage des Luftfilters (50) aufweist.

5. Fahrzeug-Klimaanlage nach Anspruch 3 und 4, **dadurch gekennzeichnet, dass** die Wartungsöffnung (46) zur Montage und/oder Demontage des CO₂-Sensors (26) und die Wartungsöffnung (46) zur Montage und/oder Demontage des Luftfilters (50) dieselbe Öffnung sind.

6. Fahrzeug-Klimaanlage nach Anspruch 4 oder 5, **dadurch gekennzeichnet, dass** der CO₂-Sensor (26) im Lüftungskanal (22) zwischen dem Verdampfer (24) und dem Luftfilter (50) angeordnet ist.

7. Fahrzeug-Klimaanlage nach einem der vorhergehenden Ansprüche, **dadurch gekennzeichnet, dass** der CO₂-Sensor (26, 26') einen Messbereich aufweist, der CO₂-Konzentrationen größer 500 ppm, insbesondere größer 1000 ppm umfasst, und/oder dass der CO₂-Sensor (26, 26') eine geringe Messgenauigkeit mit maximalen Messabweichungen von mehr als 10%, insbesondere mehr als 20% aufweist.

## Revendications

1. Système de climatisation de véhicule destiné à contrôler l'air dans un compartiment interne du véhicule (12), ayant
- un appareil de ventilation (14) qui comprend une entrée d'air (16) et également une sortie d'air (20) et peut générer un flux d'air de l'entrée d'air (16) à la sortie d'air (20),
- un conduit de ventilation (22) qui raccorde la sortie d'air (20) de l'appareil de ventilation (14) au compartiment interne du véhicule (12),
- un évaporateur (24) qui est disposé dans le conduit de ventilation (22),
- un volet d'air entrant disposé dans la région de l'entrée d'air (16) de l'appareil de ventilation (14), ledit volet d'air entrant étant configuré pour faire fonctionner le système de climatisation de véhicule (10) dans un mode d'air frais, un mode d'air recyclé ou un mode d'air mélangé, et
- un capteur de CO₂ (26, 26') pour surveiller une concentration de CO₂ dans l'air (18), ledit capteur de CO₂ (26, 26') étant disposé en amont de l'évaporateur (24) dans le système de climatisation de véhicule (10),
**caractérisé en ce qu'**est prévu un conduit d'air entrant (36) qui s'étend de l'entrée d'air (16) de l'appareil de ventilation (14) à une ouverture d'air recyclé (38) qui jouxte le compartiment interne de véhicule (12), le capteur de CO₂ (26, 26') étant disposé entre l'ouverture d'air recyclé (38) et l'évaporateur (24), le capteur de CO₂ (26) étant disposé dans le conduit de ventilation (22) entre l'évaporateur (24) et la sortie d'air (20) de l'appareil de ventilation (14), le système de climatisation de véhicule (10) étant configuré pour surveiller la concentration de CO₂ dans l'air (18) dans le mode d'air frais, le modèle d'air recyclé et le mode d'air mélangé.

2. Système de climatisation de véhicule selon la revendication 1, **caractérisé en ce qu'**est prévu un circuit de refroidissement (28) qui utilise du CO₂ comme milieu de refroidissement (29), l'évaporateur (24) étant raccordé au circuit de refroidissement (28).

3. Système de climatisation de véhicule selon la revendication 1, **caractérisé en ce que** le conduit de ventilation (22) comprend une ouverture d'entretien (46) pour l'installation et/ou le retrait du capteur de CO₂ (26) .

4. Système de climatisation de véhicule selon l'une quelconque des revendications précédentes, **caractérisé en ce qu'**un filtre à air (50) pour nettoyer l'air (18) est disposé dans le conduit de ventilation (22) en amont de l'évaporateur (24), le conduit de ventilation (22) comprenant une ouverture d'entretien (46) pour l'installation et/ou le retrait du filtre à air (50).

5. Système de climatisation de véhicule selon la revendication 3 ou 4, **caractérisé en ce que** l'ouverture d'entretien (46) pour l'installation et/ou le retrait du capteur de CO₂ (26) et l'ouverture d'entretien (46) pour l'installation et/ou le retrait du filtre à air (50) sont une seule et même ouverture.

6. Système de climatisation de véhicule selon la revendication 4 ou 5, **caractérisé en ce que** le capteur de CO₂ (26) est disposé dans le conduit de ventilation (22) entre l'évaporateur (24) et le filtre à air (50).

7. Système de climatisation de véhicule selon l'une quelconque des revendications précédentes, **caractérisé en ce que** le capteur de CO₂ (26, 26') comprend une plage de mesure qui détecte des concentrations de CO₂ supérieures à 500 ppm, en particulier supérieures à 1000 ppm, et/ou **en ce que** le capteur de CO₂ (26, 26') peut avoir un faible niveau de précision de mesure avec des écarts maximaux de mesure de plus de 10 %, en particulier plus de 20 %.
